# EUROPEAN PATENT SPECIFICATION

(11) **EP 0 880 899 B1**
(45) Date of publication and mention of the grant of the patent: **22.10.2003**
(21) Application number: 98201479.7
(22) Date of filing: 06.05.1998
(51) Int. Cl.: A23B 4/16, A23L 3/3418

(54) **Conditioned packaging for shellfish or crustaceans**
Verfahren zum konditionierten Verpacken von Schalentieren
Procédé d'emballage conditionné pour des crustacés

(30) Priority: 06.05.1997 NL 1005991
(43) Date of publication of application: 02.12.1998
(73) Proprietor: Packpat B.V., 4400 AB Yerseke (NL)
(72) Inventor: Prins, Jacobus, 4401 NH Yerseke (NL)
(74) Representative: van Westenbrugge, Andries

(56) References cited:
- EP-A- 0 720 954
- FR-A- 2 613 588
- DATABASE FSTA INTERNATIONAL FOOD INFORMATION SERVICE (IFIS), FRANFURT/MAIN, DE MORAL RAMA A: "Refrigeration and preservation of fish packaged under modified atmosphere for retail sale." XP002072585 & ALIMENTACION EQUIPOS Y TECNOLOGIA, vol. 12, no. 1, 1993, pages 101-104, INST. DEL FRIO, CSIC, CIUDAD UNIVERSITARIA, E-28040 MADRID, SPAIN
- PATENT ABSTRACTS OF JAPAN vol. 009, no. 138 (C-286), 13 June 1985 & JP 60 024168 A (SHIRAHAMA FOODS:KK), 6 February 1985
- PATENT ABSTRACTS OF JAPAN vol. 095, no. 010, 30 November 1995 & JP 07 184511 A (YOSHIAKI NAGAURA), 25 July 1995
- PATENT ABSTRACTS OF JAPAN vol. 014, no. 074 (C-0687), 13 February 1990 & JP 01 291740 A (RYOJI SASAKI), 24 November 1989
- PATENT ABSTRACTS OF JAPAN vol. 013, no. 143 (M-811), 7 April 1989 & JP 63 307080 A (MITSUI TOATSU CHEM INC), 14 December 1988
- PATENT ABSTRACTS OF JAPAN vol. 007, no. 242 (C-192), 27 October 1983 & JP 58 129930 A (ASAHI KASEI KOGYO KK), 3 August 1983

## Description

The invention relates to the field of packaging shellfish or crustaceans, in particular, though not exclusively, mussels. Various possibilities already exist for packaging shellfish or crustaceans, and these can be divided into two main categories.

In a first category, the shellfish or crustaceans are packaged fresh and alive, i.e. uncooked. In this case, the consumer has to remove the shellfish from the container during preparation and then cook them. In a second category, the shellfish are precooked, so that the consumer merely has to heat the shellfish briefly prior to consumption. An example of the latter category which may be mentioned is the packaging method which is known from EP-B-242,183 and FR-A-2,613,588.

The invention relates to a packaging belonging to the first category, i.e. packaging in which the shellfish or crustaceans are packaged fresh and alive, without being precooked. This category also included various possibilities.

Firstly, containers which are not closed, so-called "leaking" packages, can be used. Water from the shellfish or crustaceans can escape via the holes in the container, with the drawback that weight loss occurs and moreover the container becomes contaminated and does not smell fresh.

According to a second possibility, closed packagings can be used, such as for example those which are known from NL-A-9400391. A drawback of this option is that the containers take up a relatively large amount of space, up to double the volume of the packaged shellfish or crustaceans. Moreover, a relatively large quantity of material is used for containers of this nature, which represents a burden on the environment. Moreover, the packaging may be relatively heavy owing to water which is contained therein.

JP-A-07184511 discloses a packaging for shellfish, such as mussels, or crustaceans, comprising a closed container in which there is a quantity of living shellfish or crustaceans, optionally water originating from the shellfish or crustaceans, as well as a protective gas atmosphere containing O₂ and CO₂. However, no reference is made to edible shellfish.

The object of the invention is to provide a packaging of the second category mentioned above, i.e. for fresh, uncooked, living shellfish or crustaceans which does not have these drawbacks. This object is achieved in that the sum of the quantities of O₂ and CO₂ amounts to 50% to 90% of the total gas content of the container.

Since the packaging is closed, water is unable to leak out, with the result that the packaging remains clean on the outside. On the other hand, the freshness of the shellfish or crustaceans can be preserved, owing to the protective gas atmosphere which is introduced, including additional O₂ and CO₂. The addition of this gas atmosphere is of benefit to the taste and shelf life, even to such an extent that there is no longer any need to carry out subsequent inspection of the shellfish or crustaceans. During preparation, it is merely necessary to wash the shellfish, such as mussels, after which they can be cooked immediately.

Moreover, the gas mixture has a preserving effect, so that the growth of bacteria is inhibited.

Subatmospheric pressure may prevail in the container.

The quantity of O₂ may preferably amount to 25% to 50% of the total gas content of the container.

The container is preferably a bag made of flexible material which is gas-tight and liquid-tight.

The packaging containing shellfish can be heated, for example, by means of a microwave oven.

Reference is made to a packaging for fish products as is known from Japanese patent application JP-A-58129930. This packaging has a container made of flexible material in which there is a quantity of O₂ and CO₂. However, the fish products must also be injected with an aqueous alkaline solution having a pH of 7-12. This packaging is unsuitable for shellfish or crustaceans, in view of the need to inject the fish products.

Reference is made to the article "Aspectos sobre refrigeración y conservación de pescados envasados en atmósferas modificadas para su venta detallista", ALIMENTACION, EQUIPOS Y TECNOLOGICA, Vol. 12, january-february 1993, A.M. RAMA, pp. 101-104 (vide also DATABASE FSTA, INTERNATIONAL FOOD INFORMATION SERVICE (IFIS), FRANKFURT/MAIN, DE: "Refrigeration and preservation of fish packaged under modified atmosphere for retail sale", XP002072585). This article discloses the packaging in modified atmospheres of fish and crustaceans. The fish products in question are dead, and comprise i.a. fillets. The packaging contains a gas environment with O₂ and CO₂, aimed at inhibiting the growth of microorganisms, principally bacteria, and melanosis.

JP-A-60024168 discloses a vacuum packaging comprising a number of living bivalves packed with seawater and oxygen. The bivalves are held in their natural environment formed by the seawater. The weight of this packaging is relatively high as a result of the inclusion of the seawater therein.

EP-A-720954 discloses a packaging in the form of an airtight container comprising shellfish. The interior of the container can become superatmospheric. Moreover, sufficient oxygen should be present in the container in order to have the animals function aerobically. It is not envisaged to include additional O₂ and CO₂ in this packaging.

JP-A-07184511 discloses a vinyl bag with living fish in an aqueous solution. The packaging is relatively heavy, having regard to the amount of aqueous solution contained therein.

JP-A-01291740 discloses a packaging with living bivalves. The packaging is brought at a vacuum of such magnitude that the opening of the bivalves is prevented. There is no reference to the inclusion of additional O₂ and CO₂.

JP-A-63307080 discloses a packaging for shellfish filled with oxygen gas. No additional CO₂ is included in this packaging.

## Claims

1. Packaging for shellfish, such as mussels, or crustaceans, comprising a closed container in which there is a quantity of living shellfish or crustaceans, optionally water originating from the shellfish or crustaceans, as well as a protective gas atmosphere, containing O₂ and CO₂, **characterised in that** the sum of the quantities of O₂ and CO₂ amounts to 50% to 90 % of the total gas content of the container.

2. Packaging according to Claim 1, in which subatmospheric pressure prevails in the container.

3. Packaging according to Claim 1 or 2, in which the quantity of O₂ amounts to 25% to 50% of the total gas content of the container.

4. Packaging according to one of the preceding claims, in which the container is a bag made of flexible material which is gas-tight and liquid-tight.

## Patentansprüche

1. Verpackung für Schalentiere, wie beispielsweise Muscheln, oder Krustentiere, die einen geschlossenen Behälter umfasst, in dem sich eine Menge an lebenden Schalentieren oder Krustentieren, wahlweise Wasser, das von den Schalentieren oder Krustentieren stammt, sowie eine schützende Gasatmosphäre befindet, die O₂ und CO₂ enthält, **dadurch gekennzeichnet, dass** die Summe der Mengen an O₂ und CO₂ 50% bis 90% des gesamten Gasinhalts des Behälters ausmacht.

2. Verpackung nach Anspruch 1, wobei in dem Behälter subatmosphärischer Druck herrscht.

3. Verpackung nach Anspruch 1 oder 2, wobei die Menge an O₂ 25% bis 50% des gesamten Gasinhalts des Behälters ausmacht.

4. Verpackung nach einem der vorangehenden Ansprüche, wobei der Behälter ein Beutel ist, der aus flexiblem Material besteht, das gasundurchlässig und flüssigkeitsundurchlässig ist.

## Revendications

1. Emballage pour fruits de mer, tels que des moules ou des crustacés, comprenant un récipient fermé dans lequel se trouve une certaine quantité de fruits de mer ou crustacés vivants, de façon optionnelle, de l'eau provenant des fruits de mer ou des crustacés, ainsi qu'une atmosphère gazeuse protectrice, contenant de l'O₂ et du CO₂, **caractérisé en ce que** la somme des quantités d'O₂ et de CO₂ se monte à 50% jusqu'à 90% du contenu en gaz total du récipient.

2. Emballage selon la revendication 1, dans lequel une pression subatmosphérique prédomine dans le récipient.

3. Emballage selon la revendication 1 ou 2, dans lequel la quantité d'O₂ se monte à 25% jusqu'à 50% du contenu en gaz total du récipient.

4. Emballage selon l'une des revendications précédentes, dans lequel le récipient est un sac fait d'un matériau souple qui est étanche aux gaz et étanche aux liquides.
